# EUROPEAN PATENT APPLICATION

(11) **EP 4 340 395 A1**
(43) Date of publication of application: **20.03.2024**
(21) Application number: 23196755.5
(22) Date of filing: 12.09.2023
(51) Int. Cl.: H04R 25/00, G06F 3/16

(54) **A HEARING AID COMPRISING A VOICE CONTROL INTERFACE**

(30) Priority: 13.09.2022 EP 22195399
(71) Applicant: Oticon A/S, 2765 Smørum (DK)
(72) Inventor: LOZA, Agata, 00-133 Warszawa (PL); SKLODOWSKI, Albert, 00-133 Warszawa (PL); ROSLON, Pawel, 00-133 Warszawa (PL); BINDUGA, Piotr, 00-133 Warszawa (PL); OLEDZKA, Katarzyna, 00-133 Warszawa (PL)
(74) Representative: Demant

(57) **Abstract**

A hearing aid (HA) adapted to be worn by a user comprises a) at least one input transducer for converting sound in the environment to respective at least one electric input signal; b) a configurable audio signal processor (ASP) adapted to apply a number of audio processing algorithms to said at least one electric input signal; c) an output transducer for converting an output signal depending on said at least one electric input signal to stimuli perceivable as sound for said user; d) a processing parameter controller (PPC) configured to identify and apply optimized processing parameters for at least one of said number of audio processing algorithms to said at least one electric input signal, and to provide a processed signal in dependence thereof; e) a voice control interface (VCI) allowing the user to control the hearing aid via one or more spoken commands. The voice control interface comprises el) a keyword detector (KWD) configured to identify at least one of said one or more spoken commands, wherein said at least one of said one or more spoken command is a context dependent command. The processing parameter controller (PPC) is configured to apply the optimized processing parameters for the at least one of the number of audio processing algorithms in dependence of the current acoustic environment of the hearing aid and the context dependent command.

## Description

### TECHNICAL FIELD

The present application relates to the field of hearing aids. The disclosure relates in particular to a hearing aid comprising a voice control interface. The voice control interface may be configured to control functionality of the hearing aid in dependence of commands spoken by a user of the hearing aid.

The market for voice-controlled devices is quite vast. One of the well-known is the Amazon Alexa - a virtual AI assistant which can be controlled exclusively with voice and offers a rich set of functions and services such as search engine, weather forecast, news, to-do lists, music players, etc. Other similar solutions are Google Assistant or Apple's Siri.

These manufacturers often publish an API (application programming interface), which allows 3^{rd} party companies to integrate their devices or software with the mentioned virtual assistants. Thanks to that another manufacturer can focus solely on device's functions, without spending resources on developing their own speech recognition and AI solutions. As of September 2018, it has been estimated that there were over 20,000 devices that were compatible with Amazon Alexa 1, ranging from speakers and smartphones to even cars. For instance, the smart voice control technology is commonly used in the segment of household appliances. Customers can find basically every type of home equipment that is able to be controlled with voice. To start with single lightbulbs to whole light systems, thermostats, ceiling fans, refrigerators, cookers, plugs, doors, garden equipment (sprinkles), automated vacuums, etc.

Many voice-controlled devices require some 'activation' or 'wake' word (`Alexa', `OK Google', `Hey Siri') to activate the assistant before the actual command can be interpreted by the system. This prevents from unintended actions, because these devices are continuously in the 'stand by' mode, in which they actively listen for surrounding voices.

US20200312303A1 relates to keyword detection in a hearing device. Based on the context of an initiated conversation, an initiating module sends a listening initiator to a speech recognition module, and based thereon, the listening initiator determines keywords that are potentially applicable in that context. Accordingly, the hearing device does not need a large vocabulary-speech recognition module and/or corresponding computational resources.

### SUMMARY

The term a `hearing aid' (HA) is in the present context understood to mean a device that is adapted to improve or augment the hearing capability of a user by receiving a transmitted (input) audio signal (e.g. acoustically or electromagnetically) and generating a corresponding (output) audio signal, possibly modifying the input audio signal and providing the possibly modified (output) audio signal as an audible signal to at least one of the user's ears. Such audible signals may e.g. be provided in the form of an acoustic signal radiated into the user's outer ear.

The present disclosure is dedicated to hearing aid adapted to users who suffer from conductive hearing loss, mixed hearing loss, or some cases of sensorineural hearing loss, e.g. age-related hearing loss. These kinds of hearing loss impede speech intelligibility, which has a negative influence on their interactions with others in private and professional life.

During a conversation held in a difficult listening environment, the hearing aid user often feels the need to switch settings of the hearing aids(s) in order to activate a mode or program that would reduce the background noise and enhance speech intelligibility.

The idea presented in the present disclosure relates to providing a hearing aid that allows the user to automatically and seamlessly change the hearing aid's settings using voice commands.

### A hearing aid:

In an aspect of the present application, a hearing aid adapted to be worn by a user is provided. The hearing aid comprises
- at least one input transducer for converting sound in the environment to respective at least one electric input signal;
- a configurable audio signal processor adapted to apply a number of audio processing algorithms to said at least one electric input signal, or to a signal or signals originating therefrom;
- an output transducer for converting an output signal depending on said at least one electric input signal to stimuli perceivable as sound for said user;
- a processing parameter controller configured to identify and apply optimized processing parameters for at least one of said number of audio processing algorithms to said at least one electric input signal, or to a signal or signals originating therefrom, and to provide a processed signal in dependence thereof;
- a voice control interface allowing the user to control the hearing aid via one or more spoken commands; the voice control interface comprising
   ∘ a keyword detector configured to identify at least one of said one or more spoken commands, wherein said at least one of said one or more spoken command is a context dependent command.
The hearing aid may be configured to provide that the processing parameter controller is configured to apply the optimized processing parameters for the at least one of said the number of audio processing algorithms in dependence of a current acoustic environment of the hearing aid and said context dependent command.

Thereby an improved hearing aid may be provided.

In the present disclosure, the term `context dependent command' is intended to refer to a command that may be related to the current acoustic environment of the user, e.g. to a current discussion with a communication partner and to functionality of the hearing aid, e.g. to its performance in solving the task of increasing its user's ability to participate in the discussion and/or to perceive the part of the acoustic sound field that is of current interest to the user.

The term `identify optimized processing parameters` may in the present context be taken to mean 'determine' or 'select'. The processing parameter controller may be configured to *determine* optimized processing parameters for at least one of the number of audio processing algorithms (e.g. based on the at least one electric input signal, and/or on one or more detectors, e.g. related to input levels, voice/no voice, own voice, music, etc.). The processing parameter controller may be configured to *select* optimized processing parameters for at least one of the number of audio processing algorithms (e.g. from a memory wherein optimized processing parameters for at least one of the number of audio processing algorithms for different acoustic environments are stored). The optimized parameters for different acoustic environments may e.g. be determined in advance of use of the hearing aid (e.g. in the form of different hearing aid programs optimized for the different acoustic environments in question) and stored in the memory.

The processing parameter controller may form part of the configurable audio signal processor.

The context dependent command may relate to the user's perception of the current acoustic environment.

The context dependent command may be configured to have a dual function of:
- indicating to a communication partner that the listening situation provided by the current acoustic environment is difficult for the user, and
- controlling the application of the optimized processing parameters to the at least one of the number of audio processing algorithms.

The hearing aid, e.g. the keyword detector (e.g. configured to allow the detection of a key phrase'), may be configured to detect one or more specific context dependent commands. Each context dependent command may be phrased in a number (e.g. a multitude) of different ways, which all are identifiable by the keyword detector as representing said specific context demand command. A specific context dependent command may be associated with (intended for use in) a specific acoustic environment, e.g. a specific sound scene class of an environment detector.

The context dependent command may e.g. be "Could you please repeat?" or wording having a similar meaning encouraging the communication partner to speak more clearly and/or louder and/or to repeat the last sentence or word.

The context dependent command may express a wish for a communication partner to speak more clearly and/or louder and/or to repeat the last words or sentences having been spoken by the communication partner.

The keyword detector may be configured to identify a multitude of context dependent spoken commands having the same associated optimized processing parameters. The expression 'Could you please repeat?' is one example of how the wake-command can be phrased. Other examples are: 'What did you say?', 'Please say it again', 'Say that again', 'Can you repeat that?', 'Pardon?', 'I didn't understand'. Basically, any phrase that is natural for the hearing aid user's idiolect can be used as the wake-command.

A `termination keyword' may e.g. be defined and learned by the algorithm, e.g. "Back to normal mode". Alternatively, when the specific hearing aid setting(s) for improving the user's understanding (as initiated by the key phrase) is no longer needed, the hearing aid may be adapted to reset settings (e.g. to the settings before the key phrase was spoken), or e.g. by changing the program to a standard program, or via a user interface by pressing an appropriate button in an app, or by rebooting the hearing aid. The changes made to the hearing aid settings by the initiating key phrase "Could you please repeat?' (etc.) may `rolled back' (undone) after a certain time period, e.g. between 5 and 20 minutes (and then re-installed, if the user shortly after (e.g. less than 1 minute after) the roll-back again speaks the initiating key phrase).

The terms `key phrase' or 'wake-command' or 'wake phrase' are used interchangeably in the present disclosure for the context dependent command(s) without any intended difference in meaning.

The number of audio processing algorithms may comprise a noise reduction algorithm providing attenuation parameters for application to noise components in the at least one electric input signal.

The hearing aid may comprise at least two input transducers providing respective at least two electric input signals. The number of audio processing algorithms may comprise a beamforming algorithm providing spatial filtering of the sound in the environment in dependence of the at least two electric input signals and predefined or adaptively updated beamformer weights.

Optimized processing parameters may include the attenuation parameters and/or the beamformer weights.

The processing parameter controller may be configured to provide that repeated use of the context dependent command results in that the attenuation parameters are configured to increase noise reduction, and/or that the beamformer weights are configured to provide increased beamforming. The optimized processing parameters for the noise reduction algorithm and/or for the beamforming algorithm may e.g. comprise first and second sets of optimized processing parameters, e.g. a first set that is less aggressive, and a second set that is more aggressive (the second set providing increased noise reduction and/or beamforming than the first set). The first and second sets of processing parameters for a given one of the processing algorithms may thus be applied in response to a repeated use of the specific context dependent command associated with the processing algorithm in question (e.g. within a specific time period, e.g. less than 20 s, such as less than 10 s). The specific context dependent command associated with noise reduction and beamforming may be identical.

The hearing aid may e.g. be adapted to provide that directionality is increased in predefined steps every time the user's key phrase is detected (e.g. within a predefined time period). The hearing aid may e.g. be adapted to provide that the attenuation of noise becomes more and more aggressive (larger and larger attenuation, e.g a predefined amount (or an increasing amount, e.g. 3 dB larger each time) every time the user's key phrase is detected (e.g. within a predefined time period between two occurrences of the key phrase.

The hearing aid may comprise an own voice activity detector connected to the keyword detector and configured to provide that a given keyword is accepted only, if the voice of the user is simultaneously detected.

The keyword detector may comprise a separate context dependent command detector configured to detect the at least one context dependent spoken command.

The separate context dependent command detector may be located in the hearing aid. Detection of other, non-context dependent keywords, may be performed in a separate processing device or in a server accessed via a communication network. The communication network may be the Internet. The non-context dependent keywords may be detected via a cloud service.

The context dependent command detector may be trained using an APP. The APP may comprise a user interface. The APP may be configured to allow the user control functionality of the hearing aid via the user interface. The user interface may be based on a touch screen and/or comprise a voice control interface.

The current acoustic environment of the hearing aid may be determined by an acoustic environment detector.

The hearing aid may comprise an acoustic environment detector configured to classify a current acoustic environment around the hearing aid in a number of sound scene classes. The processing parameter controller may comprise the acoustic environment detector. The processing parameter controller may be based on or comprise a learning algorithm, e.g. a neural network, such as a deep neural network.

The acoustic environment detector may be configured to classify the current acoustic environment based on an analysis of the at least one electric input signal. The acoustic environment detector may be configured to classify the acoustic environment into a number of different sound scene classes, and to provide a current sound scene class in dependence of a current representation, e.g. extracted features, of the at least one electric input signal. The acoustic environment detector may comprise a learning algorithm, e.g. a neural network.

A context dependent command may be associated with a specific acoustic environment (e.g. in advance of its normal use, e.g. during fitting, or in a learning mode of operation of the hearing aid). The context dependent command or commands may e.g. be associated with a specific sound scene class or respective (e.g. different) sound scene classes, respectively (e.g. if the multitude of context dependent commands have different intended meaning, and thus may refer to different acoustic environments). The environment detector may be configured to classify the current acoustic environment in a class or classes, at least including those associated with said context dependent command or commands.

The hearing aid may comprise a conversation detector configured to identify whether or not or with what probability, the user is currently engaged in a conversation and to provide a conversation control signal indicative thereof. Conversation tracking (e.g. a conversation detector) can be provided in a variety of ways, e.g. using a combination of own voice detection, and general voice detection, and an analysis of their mutual timing (e.g. identification of turn-taking), etc. Thereby situations where the dual meaning of the context dependent commands can be identified.

The hearing aid, e.g. the processing parameter controller, may be configured to apply the optimized processing parameters for the at least one of the number of audio processing algorithms in dependence of the specific current acoustic environment of the hearing aid and the context dependent command. In other words, the optimized processing parameters for the at least one of the number of audio processing algorithms are applied when a) a context dependent command is detected by the keyword detector and b) (at the same time) the specific current acoustic environment of the hearing aid (e.g. the specific sound scene class, e.g. `speech in noise' or 'conversation') associated with the detected context dependent command is detected (e.g. by the acoustic environment detector).

The hearing aid may be constituted by or comprise an air-conduction type hearing aid, a bone-conduction type hearing aid, a cochlear implant type hearing aid, or a combination thereof.

The hearing aid may be adapted to provide a frequency dependent gain and/or a level dependent compression and/or a transposition (with or without frequency compression) of one or more frequency ranges to one or more other frequency ranges, e.g. to compensate for a hearing impairment of a user. The hearing aid may comprise a signal processor for enhancing the input signals and providing a processed output signal.

The hearing aid may comprise an output unit for providing a stimulus perceived by the user as an acoustic signal based on a processed electric signal. The output unit may comprise a number of electrodes of a cochlear implant (for a CI type hearing aid) or a vibrator of a bone conducting hearing aid. The output unit may comprise an output transducer. The output transducer may comprise a receiver (loudspeaker) for providing the stimulus as an acoustic signal to the user (e.g. in an acoustic (air conduction based) hearing aid). The output transducer may comprise a vibrator for providing the stimulus as mechanical vibration of a skull bone to the user (e.g. in a bone-attached or bone-anchored hearing aid). The output unit may (additionally or alternatively) comprise a transmitter for transmitting sound picked up-by the hearing aid to another device, e.g. a far-end communication partner (e.g. via a network, e.g. in a telephone mode of operation, or in a headset configuration).

The hearing aid may comprise an input unit for providing an electric input signal representing sound. The input unit may comprise an input transducer, e.g. a microphone, for converting an input sound to an electric input signal. The input unit may comprise a wireless receiver for receiving a wireless signal comprising or representing sound and for providing an electric input signal representing the sound.

The wireless receiver and/or transmitter may e.g. be configured to receive and/or transmit an electromagnetic signal in the radio frequency range (3 kHz to 300 GHz). The wireless receiver and/or transmitter may e.g. be configured to receive and/or transmit an electromagnetic signal in a frequency range of light (e.g. infrared light 300 GHz to 430 THz, or visible light, e.g. 430 THz to 770 THz).

The hearing aid may comprise a directional microphone system adapted to spatially filter sounds from the environment, and thereby enhance a target acoustic source among a multitude of acoustic sources in the local environment of the user wearing the hearing aid. The directional system may be adapted to detect (such as adaptively detect) from which direction a particular part of the microphone signal originates. This can be achieved in various different ways as e.g. described in the prior art. In hearing aids, a microphone array beamformer is often used for spatially attenuating background noise sources. The beamformer may comprise a linear constraint minimum variance (LCMV) beamformer. Many beamformer variants can be found in literature. The minimum variance distortionless response (MVDR) beamformer is widely used in microphone array signal processing. Ideally the MVDR beamformer keeps the signals from the target direction (also referred to as the look direction) unchanged, while attenuating sound signals from other directions maximally. The generalized sidelobe canceller (GSC) structure is an equivalent representation of the MVDR beamformer offering computational and numerical advantages over a direct implementation in its original form.

The hearing aid may comprise antenna and transceiver circuitry allowing a wireless link to an entertainment device (e.g. a TV-set), a communication device (e.g. a telephone), a wireless microphone, or another hearing aid, etc. The hearing aid may thus be configured to wirelessly receive a direct electric input signal from another device. Likewise, the hearing aid may be configured to wirelessly transmit a direct electric output signal to another device. The direct electric input or output signal may represent or comprise an audio signal and/or a control signal and/or an information signal.

In general, a wireless link established by antenna and transceiver circuitry of the hearing aid can be of any type. The wireless link may be a link based on near-field communication, e.g. an inductive link based on an inductive coupling between antenna coils of transmitter and receiver parts. The wireless link may be based on far-field, electromagnetic radiation. Preferably, frequencies used to establish a communication link between the hearing aid and the other device is below 70 GHz, e.g. located in a range from 50 MHz to 70 GHz, e.g. above 300 MHz, e.g. in an ISM range above 300 MHz, e.g. in the 900 MHz range or in the 2.4 GHz range or in the 5.8 GHz range or in the 60 GHz range (ISM=Industrial, Scientific and Medical, such standardized ranges being e.g. defined by the International Telecommunication Union, ITU). The wireless link may be based on a standardized or proprietary technology. The wireless link may be based on Bluetooth technology (e.g. Bluetooth Low-Energy technology), or Ultra WideBand (UWB) technology.

The hearing aid may be or form part of a portable (i.e. configured to be wearable) device, e.g. a device comprising a local energy source, e.g. a battery, e.g. a rechargeable battery. The hearing aid may e.g. be a low weight, easily wearable, device, e.g. having a total weight less than 100 g, such as less than 20 g, such as less than 5 g.

The hearing aid may comprise a 'forward' (or `signal') path for processing an audio signal between an input and an output of the hearing aid. A signal processor may be located in the forward path. The signal processor may be adapted to provide a frequency dependent gain according to a user's particular needs (e.g. hearing impairment). The hearing aid may comprise an 'analysis' path comprising functional components for analyzing signals and/or controlling processing of the forward path. Some or all signal processing of the analysis path and/or the forward path may be conducted in the frequency domain, in which case the hearing aid comprises appropriate analysis and synthesis filter banks. Some or all signal processing of the analysis path and/or the forward path may be conducted in the time domain.

The hearing aid, e.g. the input unit, and or the antenna and transceiver circuitry may comprise a transform unit for converting a time domain signal to a signal in the transform domain (e.g. frequency domain or Laplace domain, Z transform, wavelet transform, etc.). The transform unit may be constituted by or comprise a TF-conversion unit for providing a time-frequency representation of an input signal. The time-frequency representation may comprise an array or map of corresponding complex or real values of the signal in question in a particular time and frequency range. The TF conversion unit may comprise a filter bank for filtering a (time varying) input signal and providing a number of (time varying) output signals each comprising a distinct frequency range of the input signal. The TF conversion unit may comprise a Fourier transformation unit (e.g. a Discrete Fourier Transform (DFT) algorithm, or a Short Time Fourier Transform (STFT) algorithm, or similar) for converting a time variant input signal to a (time variant) signal in the (time-)frequency domain. The frequency range considered by the hearing aid from a minimum frequency fₘᵢₙ to a maximum frequency fₘₐₓ may comprise a part of the typical human audible frequency range from 20 Hz to 20 kHz, e.g. a part of the range from 20 Hz to 12 kHz. Typically, a sample rate fₛ is larger than or equal to twice the maximum frequency fₘₐₓ, fₛ ≥ 2fₘₐₓ. A signal of the forward and/or analysis path of the hearing aid may be split into a number *NI* of frequency bands (e.g. of uniform width), where *NI* is e.g. larger than 5, such as larger than 10, such as larger than 50, such as larger than 100, such as larger than 500, at least some of which are processed individually. The hearing aid may be adapted to process a signal of the forward and/or analysis path in a number *NP* of different frequency channels (*NP* ≤ *NI*). The frequency channels may be uniform or non-uniform in width (e.g. increasing in width with frequency), overlapping or non-overlapping.

The hearing aid may be configured to operate in different modes, e.g. a normal mode and one or more specific modes, e.g. selectable by a user, or automatically selectable. A mode of operation may be optimized to a specific acoustic situation or environment, e.g. a communication mode, such as a telephone mode. A mode of operation may include a low-power mode, where functionality of the hearing aid is reduced (e.g. to save power), e.g. to disable wireless communication, and/or to disable specific features of the hearing aid.

The hearing aid may comprise a number of detectors configured to provide status signals relating to a current physical environment of the hearing aid (e.g. the current acoustic environment), and/or to a current state of the user wearing the hearing aid, and/or to a current state or mode of operation of the hearing aid. Alternatively or additionally, one or more detectors may form part of an *external* device in communication (e.g. wirelessly) with the hearing aid. An external device may e.g. comprise another hearing aid, a remote control, and audio delivery device, a telephone (e.g. a smartphone), an external sensor, etc.

One or more of the number of detectors may operate on the full band signal (time domain). One or more of the number of detectors may operate on band split signals ((time-) frequency domain), e.g. in a limited number of frequency bands.

The number of detectors may comprise a level detector for estimating a current level of a signal of the forward path. The detector may be configured to decide whether the current level of a signal of the forward path is above or below a given (L-)threshold value. The level detector operates on the full band signal (time domain). The level detector operates on band split signals ((time-) frequency domain).

The hearing aid may comprise a voice activity detector (VAD) for estimating whether or not (or with what probability) an input signal comprises a voice signal (at a given point in time). A voice signal may in the present context be taken to include a speech signal from a human being. It may also include other forms of utterances generated by the human speech system (e.g. singing). The voice activity detector unit may be adapted to classify a current acoustic environment of the user as a VOICE or NO-VOICE environment. This has the advantage that time segments of the electric microphone signal comprising human utterances (e.g. speech) in the user's environment can be identified, and thus separated from time segments only (or mainly) comprising other sound sources (e.g. artificially generated noise). The voice activity detector may be adapted to detect as a VOICE also the user's own voice. Alternatively, the voice activity detector may be adapted to exclude a user's own voice from the detection of a VOICE.

The hearing aid may comprise an own voice detector for estimating whether or not (or with what probability) a given input sound (e.g. a voice, e.g. speech) originates from the voice of the user of the system. A microphone system of the hearing aid may be adapted to be able to differentiate between a user's own voice and another person's voice and possibly from NON-voice sounds.

The number of detectors may comprise a movement detector, e.g. an acceleration sensor. The movement detector may be configured to detect movement of the user's facial muscles and/or bones, e.g. due to speech or chewing (e.g. jaw movement) and to provide a detector signal indicative thereof.

The hearing aid may comprise a classification unit configured to classify the current situation based on input signals from (at least some of) the detectors, and possibly other inputs as well. In the present context `a current situation' may be taken to be defined by one or more of
a) the physical environment (e.g. including the current electromagnetic environment, e.g. the occurrence of electromagnetic signals (e.g. comprising audio and/or control signals) intended or not intended for reception by the hearing aid, or other properties of the current environment than acoustic);
b) the current acoustic situation (input level, feedback, etc.), and
c) the current mode or state of the user (movement, temperature, cognitive load, etc.);
d) the current mode or state of the hearing aid (program selected, time elapsed since last user interaction, etc.) and/or of another device in communication with the hearing aid.

The classification unit may be based on or comprise a neural network, e.g. a recurrent neural network, e.g. a trained neural network.

The hearing aid may comprise an acoustic (and/or mechanical) feedback control (e.g. suppression) or echo-cancelling system. Adaptive feedback cancellation has the ability to track feedback path changes over time. It is typically based on a linear time invariant filter to estimate the feedback path but its filter weights are updated over time. The filter update may be calculated using stochastic gradient algorithms, including some form of the Least Mean Square (LMS) or the Normalized LMS (NLMS) algorithms. They both have the property to minimize the error signal in the mean square sense with the NLMS additionally normalizing the filter update with respect to the squared Euclidean norm of some reference signal.

The hearing aid may further comprise other relevant functionality for the application in question, e.g. compression, noise reduction, etc.

The hearing aid may comprise a hearing instrument, e.g. a hearing instrument adapted for being located at the ear or fully or partially in the ear canal of a user, e.g. a headset, an earphone, an ear protection device or a combination thereof. A hearing system may comprise a speakerphone (comprising a number of input transducers (e.g. a microphone array) and a number of output transducers, e.g. one or more loudspeakers, and one or more audio (and possibly video) transmitters e.g. for use in an audio conference situation), e.g. comprising a beamformer filtering unit, e.g. providing multiple beamforming capabilities.

### Use:

In an aspect, use of a hearing aid as described above, in the `detailed description of embodiments' and in the claims, is moreover provided. Use may be provided in a system comprising one or more hearing aids (e.g. hearing instruments), headsets, ear phones, active ear protection systems, etc., e.g. in handsfree telephone systems, teleconferencing systems (e.g. including a speakerphone), public address systems, karaoke systems, classroom amplification systems, etc.

### A method:

In an aspect, a method of operating a hearing aid adapted to be worn by a user is provided. The method comprises
- providing at least one electric input signal;
- applying a number of audio processing algorithms to the at least one electric input signal, or to a signal or signals originating therefrom;
- converting an output signal depending on the at least one electric input signal to stimuli perceivable as sound for the user;
- identifying and applying optimized processing parameters for at least one of the number of audio processing algorithms;
- providing a voice control interface (VCI) allowing the user to control the hearing aid via one or more spoken commands and to identify at least one of the one or more spoken commands, wherein the at least one of the one or more spoken command is a context dependent command.
The method may further comprise applying the optimized processing parameters for the at least one of the number of audio processing algorithms in dependence of the current acoustic environment of the hearing aid and the context dependent command.

It is intended that some or all of the structural features of the device described above, in the `detailed description of embodiments' or in the claims can be combined with embodiments of the method, when appropriately substituted by a corresponding process and vice versa. Embodiments of the method have the same advantages as the corresponding devices.

The context dependent command may be configured to have a dual function of:
- indicating to a communication partner that the listening situation provided by the current acoustic environment is difficult for the user, and
- controlling the application of the optimized processing parameters to the at least one of said number of audio processing algorithms.

### A computer readable medium or data carrier:

In an aspect, a tangible computer-readable medium (a data carrier) storing a computer program comprising program code means (instructions) for causing a data processing system (a computer) to perform (carry out) at least some (such as a majority or all) of the (steps of the) method described above, in the `detailed description of embodiments' and in the claims, when said computer program is executed on the data processing system is furthermore provided by the present application.

By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Other storage media include storage in DNA (e.g. in synthesized DNA strands). Combinations of the above should also be included within the scope of computer-readable media. In addition to being stored on a tangible medium, the computer program can also be transmitted via a transmission medium such as a wired or wireless link or a network, e.g. the Internet, and loaded into a data processing system for being executed at a location different from that of the tangible medium.

### A computer program:

A computer program (product) comprising instructions which, when the program is executed by a computer, cause the computer to carry out (steps of) the method described above, in the `detailed description of embodiments' and in the claims is furthermore provided by the present application.

### A data processing system:

In an aspect, a data processing system comprising a processor and program code means for causing the processor to perform at least some (such as a majority or all) of the steps of the method described above, in the `detailed description of embodiments' and in the claims is furthermore provided by the present application.

### A hearing system:

In a further aspect, a hearing system comprising a hearing aid as described above, in the `detailed description of embodiments', and in the claims, AND an auxiliary device is moreover provided.

The hearing system may be adapted to establish a communication link between the hearing aid and the auxiliary device to provide that information (e.g. control and status signals, possibly audio signals) can be exchanged or forwarded from one to the other.

The auxiliary device may be constituted by or comprise a remote control, a smartphone, or other portable or wearable electronic device, such as a smartwatch or the like.

The auxiliary device may be constituted by or comprise a remote control for controlling functionality and operation of the hearing aid(s). The function of a remote control may be implemented in a smartphone, the smartphone possibly running an APP allowing to control the functionality of the audio processing device via the smartphone (the hearing aid(s) comprising an appropriate wireless interface to the smartphone, e.g. based on Bluetooth or some other standardized or proprietary scheme).

The auxiliary device may be constituted by or comprise an audio gateway device adapted for receiving a multitude of audio signals (e.g. from an entertainment device, e.g. a TV or a music player, a telephone apparatus, e.g. a mobile telephone or a computer, e.g. a PC, a wireless microphone, etc.) and adapted for selecting and/or combining an appropriate one of the received audio signals (or combination of signals) for transmission to the hearing aid.

The auxiliary device may be constituted by or comprise another hearing aid. The hearing system may comprise two hearing aids adapted to implement a binaural hearing system, e.g. a binaural hearing aid system.

### An APP:

In a further aspect, a non-transitory application, termed an APP, is furthermore provided by the present disclosure. The APP comprises executable instructions configured to be executed on an auxiliary device to implement a user interface for a hearing aid or a hearing system described above in the `detailed description of embodiments', and in the claims. The APP may be configured to run on cellular phone, e.g. a smartphone, or on another portable device allowing communication with said hearing aid or said hearing system.

The user interface may be adapted to allow the user to enter, e.g. user defined, context dependent commands.

The APP may comprise a learning algorithm configured to recognize the context dependent commands when spoken by the user. The learning algorithm may be configured to build a model of the user's voice based on the, e.g. user defined, context dependent commands provided by the user. The learning algorithm of the APP may constitute or form part of a keyword or key-phrase detector configured to detect the context dependent command or commands (or different versions of the context dependent command or commands having the same intended meaning, e.g. with slightly different wording.

The APP may be adapted to (e.g. in a learning phase) allow the user to enter at least one context dependent command via the user interface. The context dependent command, e.g. different oral formulations of the context dependent command (having the same intended meaning) may be entered via the user interface. The user interface may comprise a voice interface, comprising a microphone.

The APP may be adapted to allow a user to associate a specific context dependent command with a specific current acoustic environment via the user interface. The APP may be configured to allow user to associate a specific context dependent command or commands with a specific sound scene class representative with a specific acoustic environment.

The APP may be configured to include a guideline to guide the user how (e.g. in a learning phase) to enter context dependent commands via the user interface.

Embodiments of the disclosure may e.g. be useful in applications such as hearing aids or headsets.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
FIG. 1 shows exemplary sources of speech enhancement methods,
FIG. 2 shows speech audiometry for an exemplary hearing aid user: The (piece-wise linear) graphs represent the percentage of correctly repeated words (vertical axis) for a given loudness measured in dB HL (horizontal axis) (using circular symbols (o) for the right ear, and cross symbols (x) for the left ear), where the graphs indicated by 1 are for unaided hearing (without hearing aids) and the graphs indicated by 2 are for aided hearing (with hearing aids),
FIG. 3 shows a use case of a hearing aid according to the present disclosure,
FIG. 4 shows a flow diagram for a voice command usage scenario according to the present disclosure,
FIG. 5 shows speech audiometry for an exemplary hearing aid user: The (piece-wise linear) graphs represent the percentage of correctly repeated words (vertical axis) for a given loudness measured in dB HL (horizontal axis) (using circular symbols (o) for the right ear, and cross symbols (x) for the left ear), where the graphs indicated by 1 is for unaided hearing (without hearing aids), 2 is for aided hearing (with hearing aids), 3 is for aided with enhancement,
FIG. 6 shows an embodiment a hearing aid according to the present disclosure, and
FIG. 7 shows an embodiment of a hearing aid in communication with an auxiliary device adapted to run an APP for configuring a voice control interface (VCI) comprising context dependent commands according to the present disclosure.

The figures are schematic and simplified for clarity, and they just show details which are essential to the understanding of the disclosure, while other details are left out. Throughout, the same reference signs are used for identical or corresponding parts.

Further scope of applicability of the present disclosure will become apparent from the detailed description given hereinafter. However, it should be understood that the detailed description and specific examples, while indicating preferred embodiments of the disclosure, are given by way of illustration only. Other embodiments may become apparent to those skilled in the art from the following detailed description.

### DETAILED DESCRIPTION OF EMBODIMENTS

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

The present application relates to the field of hearing aids. The disclosure relates in particular to a hearing aid comprising a voice control interface. The voice control interface may be configured to control functionality of the hearing aid in dependence of commands spoken by a user of the hearing aid.

When a voice control interface according to the present disclosure is implemented in a hearing aid, the hearing aid will continuously be able to detect predefined voice commands coming from the hearing aid user (while ignoring the same commands coming from other people). It may be achieved using learning algorithms, e.g. machine learning techniques.

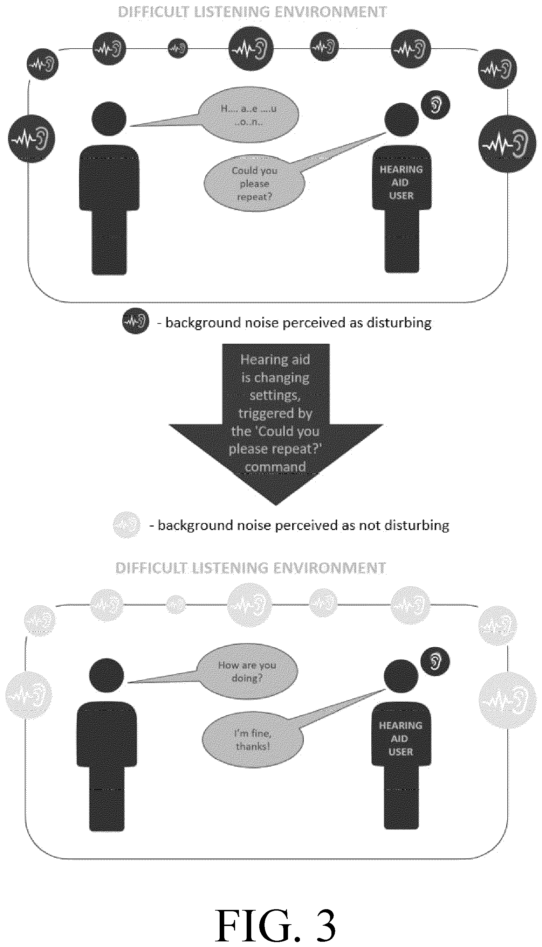

In order to work correctly, a learning algorithm needs to build a model based on samples of the voice commands, provided by the user, cf. e.g. EP3726856A1 (e.g. FIG. 3D, 3E in EP3726856A1). The learning process may include that the user is asked to record her/his voice commands using a dedicated solution, e.g. with the help of a hearing care professional (HCP) during a physical visit, or using a mobile application (APP). The trained model may then be written into the hearing aid (e.g. as user configurable software or as firmware).

The predefined voice commands should allow the user to utilize them in the context of the conversation. For example, a command like 'Could you please repeat?' would not only constitute a kind request to the interlocutor to repeat his/her statement but would also silently (automatically) change the hearing aid's settings, giving the user a bigger chance to understand this message (once repeated).

For the user's convenience, it will be possible to define more than one version of the same voice command (in many different languages, for example). It will make it easier to use them in the context of the conversation.

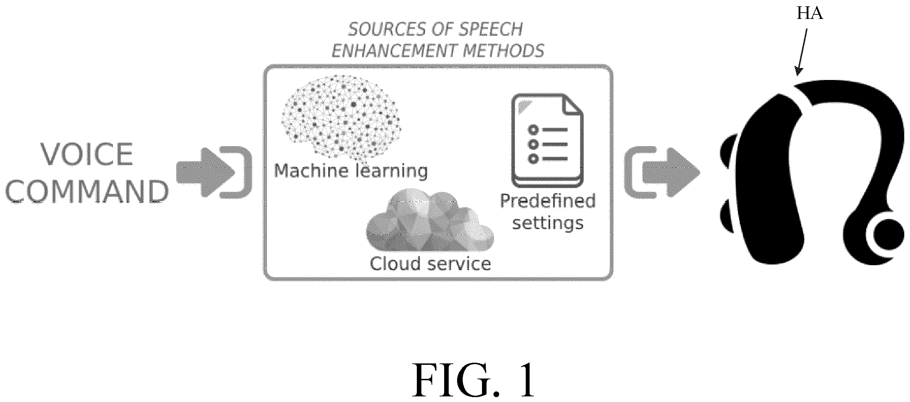

FIG. 1 shows exemplary sources of speech enhancement methods.

The hearing aid (HA) may be configured to allow specific voice commands to change hearing aid settings (HA-settings). As indicated in FIG. 1, this may mean:
- Application of HA-settings predefined by the HCP (cf. 'Predefined settings' in FIG. 1).
- Change HA settings (e.g., increase/decrease gains, change noise reduction, activate/deactivate or change directionality), e.g. controlled by a further algorithm (e.g. based on machine learning techniques), which is configured to adapt to a current acoustic situation and propose appropriate HA-settings for such acoustic situation (cf. `Machine learning' in FIG. 1), see e.g. WO2017059881A1.
- Change of HA settings (e.g. 'optimized parameters') based on data stored in a cloud service (cf. `Cloud service' in FIG. 1).

The automatic switch of settings, described above, compared to the manual way that is being used nowadays, addresses the needs of the hearing aid user in a far better way. It must be noted that when the users are forced to switch the settings manually during a conversation, they experience several obstacles. Firstly, they may need to interrupt the flow of conversation, which might be perceived by them as uncomfortable, especially in a situation where more people are engaged in the discussion. Secondly, the user might be afraid of switching the settings in a wrong way, which would worsen the hearing aids' performance and cause yet more difficulties in speech understanding. This is even a bigger obstacle for the users with finger dexterity deficits, which constitute a great proportion of hearing-impaired people. Thirdly, some of the users may feel embarrassed and find it uneasy to admit in public that they experience difficulties with understanding the conversation. All of the above-mentioned factors may cause the user to refrain from switching the devices' settings. Therefore, they cannot fully participate in the conversation and their listening effort is much bigger than it could be if the hearing aid could adjust seamlessly to the challenging acoustic situation.

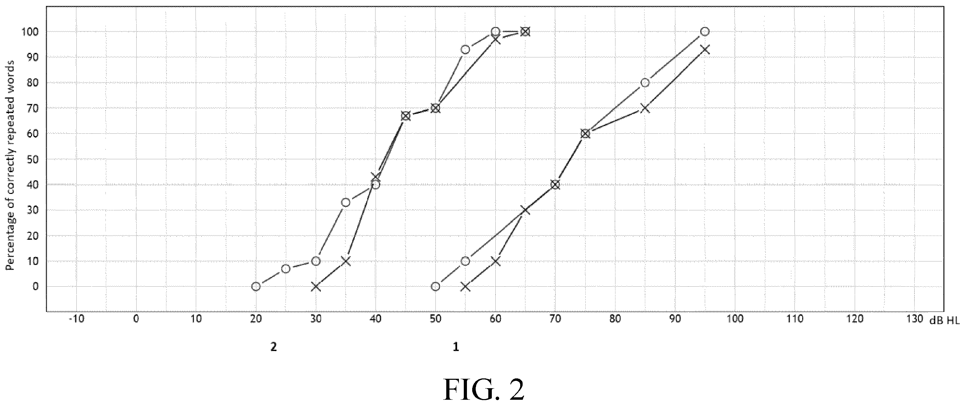

There is a HA user with age-related hearing loss, experiencing difficulties with speech understanding, especially in complex acoustics environments. FIG. 2 displays results of their unaided (1 - without hearing aids) and aided (2 - with hearing aids) speech audiometry conducted in difficult listening conditions.

FIG. 2 shows speech audiometry for an exemplary hearing aid user: The (piece-wise linear) graphs represent the percentage of correctly repeated words (vertical axis) for a given loudness measured in dB HL (horizontal axis) (using circular symbols (o) for the right ear, and cross symbols (x) for the left ear), where the graphs indicated by 1 are for unaided hearing (without hearing aids) and the graphs indicated by 2 are for aided hearing (with hearing aids).

Before the function of turning on speech enhancement by a voice command can be used, it needs to be configured. The configuration can be done by the HCP with the use of Fitting Software, or by the HA user with the use of a mobile application. In both cases the HA user records a wake phrase, e.g. 'Could you please repeat?' and sets it to be recognized by the hearing aid. When this configuration is completed, the HA is ready for supporting the user in the new way.

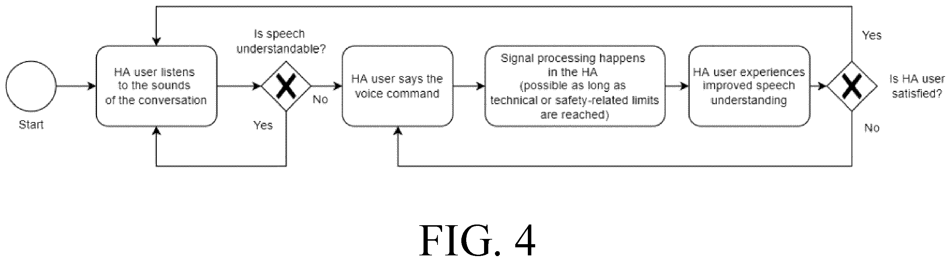

As illustrated in FIG. 3 and FIG. 4, the HA user can benefit from the solution when speech intelligibility is not on a satisfactory level.

FIG. 3 shows a use case of a hearing aid according to the present disclosure.

In FIG. 3 an example of a listening situation in a difficult environment is presented. The listening situation exhibits a high level of background noise that hinders the understanding of speech for the hearing aid user. The user decides to activate a change of hearing aid settings by using the wake phrase like 'Could you please repeat?'. In reaction to this trigger, the hearing aid is changing settings in a defined way, e.g. determined by a predefined or learning algorithm, e.g. based on machine learning techniques (as e.g. indicated in FIG. 1 by items denoted `Machine learning' and `Cloud service' in FIG. 1) or a more simple selection among a number of different predefined settings, e.g. already stored in memory of the hearing aid, e.g. provided by an HCP, e.g. during a fitting session, or chosen by the user (e.g. via an APP). The change of hearing aid settings in response to the wake phrase is intended to have a positive impact on speech understanding by reducing the influence of background noise. Thanks to that the hearing aid user understands the speech better.

FIG. 4 shows a flow diagram for a voice command usage scenario according to the present disclosure.

FIG. 4 represents a flow diagram for the usage of the voice command. It covers both the aspect of human decisions and the automated switch of settings in the hearing aid. In a difficult hearing environment, listening to the sounds of a conversation, the hearing aid user decides if the speech is understandable. In case it is not, the user speaks the 'Could you please repeat?' sentence. The HA recognizes the phrase and automatically switches settings to improve speech understanding. The change is adjusted to both user's hearing loss and their hearing preferences, e.g. as determined by any of the methods mentioned in connection with FIG. 1. If needed, the HA user can repeat the voice command till they are satisfied with the HA performance and speech is understandable (or till the technical or safety-related limits are reached). The hearing aid may e.g. be adapted to provide that directionality is increased in predefined steps every time the user's key phrase is detected (e.g. within a predefined time period, e.g. 30-60 s after the 'first' time the key phrase is detected). The hearing aid may e.g. be adapted to provide that the attenuation of noise becomes more and more aggressive (larger and larger attenuation, e.g. 3 dB at a time) every time the user's key phrase is detected (e.g. within a predefined time period, e.g. 30-60 s).

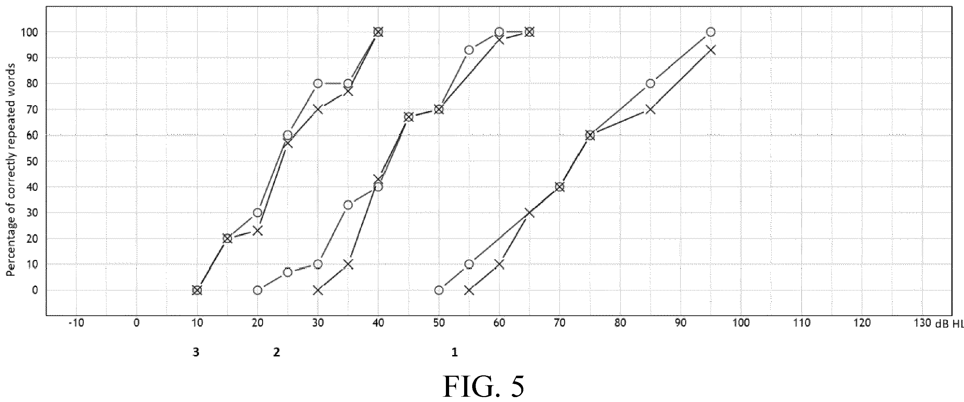

The improved understanding can be seen on the below FIG. 5 - measurement (3).

FIG. 5 shows speech audiometry for an exemplary hearing aid user: The (piece-wise linear) graphs represent the percentage of correctly repeated words (vertical axis) for a given loudness measured in dB HL (horizontal axis) (using circular symbols (o) for the right ear, and cross symbols (x) for the left ear), where the graphs indicated by 1 is for unaided hearing (without hearing aids), 2 is for aided hearing (with hearing aids), 3 is for aided with enhancement.

The expression 'Could you please repeat?' is one example of how the wake-command can be phrased. Other examples are: 'What did you say?', 'Please say it again', 'Say that again', 'Can you repeat that?', 'Pardon?', 'I didn't understand'. Basically, any phrase that is natural for the hearing aid user's idiolect can be used as the wake-command (wake phrase).

Other context dependent commands may relate to specific difficult listening situations, e.g. to a reverberant room (e.g. a church or other large room or setting with reflecting walls).

A context dependent command related to reverberation may be 'There is reverberation here' (or equivalent), which should have the dual effect of encouraging a communication partner to speak more clearly (or slowly) AND that the hearing aid changes settings, e.g. to apply a dereverberation algorithm (or similar processing changes to reduce the effect).

A context dependent command related to wind noise may be 'There is a lot of wind here' (or equivalent), which should have the dual effect of encouraging a communication partner to speak more clearly (or slowly), or try to protect the user from the wind exposure AND that the hearing aid changes settings, e.g. to apply a wind noise algorithm (or similar processing changes to apply more attenuation of wind noise).

The context dependent commands having a purpose of talking to a communication partner as well as to the voice control interface of the hearing aid may be complemented by context dependent commands that only speak to the voice control interface.

A first example may be if the user engages in a conversation with people (e.g. children) having a high pitch voice, a context dependent command could be `lower frequency' (or equivalent) instructing the hearing aid to apply a frequency lowering algorithm transpose the speech frequencies to a lower range.

A second example may be if the user wants to listen to music, a context dependent command could be 'Let's listen to some music' (or equivalent) instructing the hearing aid to shift to a music program AND optionally turn on streaming audio from an audio delivery device (e.g. a phone).

A `termination keyword' may e.g. be defined and learned by the algorithm, e.g. "Back to normal mode". Alternatively, when the specific hearing aid setting(s) for improving he user's understanding (as initiated by the key phrase) is no longer needed, the hearing aid may be adapted to reset settings (e.g. to the settings before the key phrase was spoken), or e.g. by changing the program to a standard program, or via a user interface by pressing an appropriate button in an APP, or by rebooting the hearing aid. The changes made to the hearing aid settings by the initiating key phrase "Could you please repeat?' (etc.) may be `rolled back' (undone) after a certain time period, e.g. between 5 and 20 minutes (and then re-installed, if the user shortly after (e.g. less than 1 minute after) the roll-back again speaks the initiating key phrase).

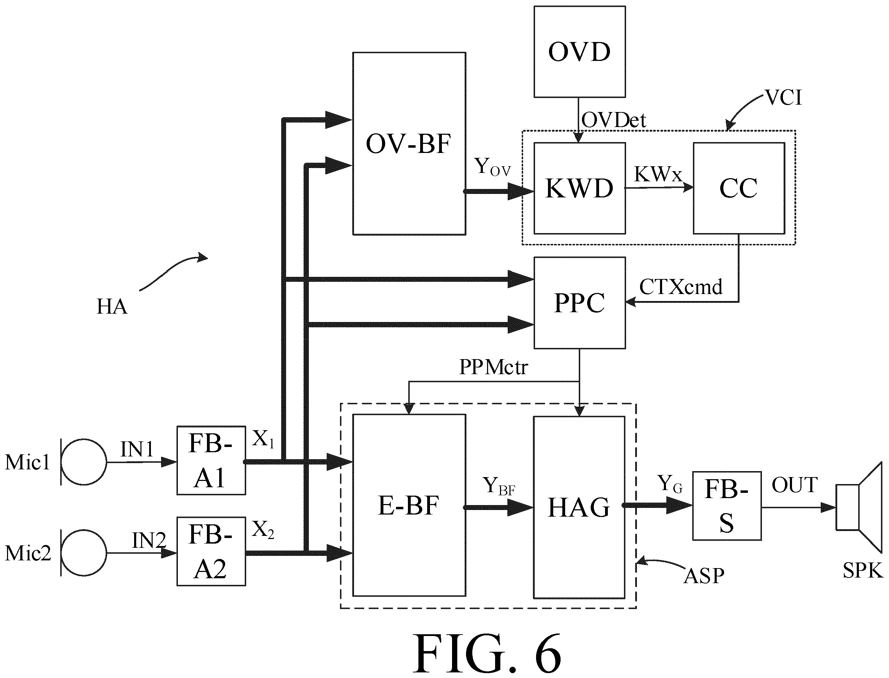

FIG. 6 shows an embodiment a hearing aid according to the present disclosure. The hearing aid (HA) may be adapted to be worn by a user, e.g. at or in an ear of the user. The hearing aid may be partitioned in various ways e.g. comprising an earpiece configured to be located at or in an ear canal of the user and a processing part. The processing part may be embodied in a BTE-part adapted for being located at or behind the ear (pinna) of the user. The processing part may be adapted to be located elsewhere on the user's body or to be worn by the user, e.g. in a pocket or the like. The hearing aid comprises at least one input transducer (here two microphones (Mic1, Mic2)) for converting sound in the environment to respective at least one electric input signal (here two microphone signals (IN1, IN2)). In the embodiment of FIG. 6, the hearing aid comprises an analysis filter bank (FB-A1, FB-A2) connected to the respective microphones (Mid, Mic2) and configured to provide said electric input signals in a time-frequency representation (*k,l*) comprising a multitude (*K*) of frequency sub-bands (cf. signals (X₁, X₂)), where *k* is a frequency index and *l* is a time-(frame) index. The hearing aid further comprises a configurable audio signal processor (ASP) adapted to apply a number of audio processing algorithms to the at least one electric input signal (IN1, IN2), or (as here) to signals (X₁, X₂) originating therefrom, and to provide a processed signal (Y_{G}) in dependence thereof. The hearing aid further comprises an output transducer, here a loudspeaker (SPK), for converting an output signal (OUT) depending on the at least one electric input signal (IN1, IN2) to stimuli perceivable as sound for the user. In the embodiment of FIG. 6, the hearing aid comprises a synthesis filter bank (FB-S) connected to the audio signal processor (ASP) and configured to provide output signal (OUT) as a time-domain signal (by conversion from the time-frequency representation (*k*, *l*) of the processed signal (Y_{G}) from the audio signal processor (ASP). In the embodiment of FIG. 6, the audio signal processor (ASP) comprises an environment beamformer (E-BF) configured to receive the electric input signals (X₁, X₂) and to provide a beamformed signal (Y_{BF}) in dependence thereof and of fixed or adaptively updated beamformer weights. The beamformed signal (Y_{BF}) provides a spatial filtering of the sound field impinging on the microphones of the hearing aid. The beamformed signal (Y_{BF}) may e.g. be focused on a communication partner of the user. The environment beamformer (E-BF) may e.g. be activated via the voice control interface (VCI) and the processing parameter controller (PPC), via control signal PPMCtr, cf. further below. The audio signal processor (ASP) further comprises a hearing aid gain unit (HAG) for applying frequency and level dependent gain to the beamformed signal (Y_{BF}) to thereby provide a processed signal (Y_{G}). The hearing aid gain unit (HAG) may further comprise other algorithms, e.g. a noise reduction algorithm applied via a post filter to reduce remaining noise in the beamformed signal (Y_{BF}). The control signal PPMCtr from the processing parameter controller (PPC) to the hearing aid gain unit (HAG) may e.g. be used to optimize processing parameters of the noise reduction algorithm (e.g. to increase attenuation in noisy environments, when requested by the user via the context dependent command). The hearing aid (HA) may comprise an acoustic environment detector configured to classify a current acoustic environment around the hearing aid in a number of sound scene classes, e.g. in dependence on the at least one electric input signal (IN1, IN2).

The hearing aid further comprises a processing parameter controller (PPC) configured to determine and apply optimized processing parameters for at least one of said number of audio processing algorithms of the audio signal processor (ASP), cf. control signal PPMctr from the processing parameter controller (PPC) to the audio signal processor (ASP). The processing parameter controller (PPM) may comprise the acoustic environment detector. The processing parameter controller (PPM) may be based on or comprise a learning algorithm, e.g. a neural network, such as a deep neural network. The hearing aid further comprises a voice control interface (VCI) allowing the user to control the hearing aid via one or more spoken commands. The voice control interface (VCI) comprises a keyword detector (KWD) configured to identify at least one of the one or more spoken commands. The at least one of the one or more spoken commands is a context dependent command, cf. control signal CTXcmd from the voice control interface (VCI) to the processing parameter controller (PPC). The processing parameter controller (PPC) is configured to apply the optimized processing parameters for the at least one of the number of audio processing algorithms (e.g. a beamforming algorithm or other noise reduction algorithm) in dependence of the current acoustic environment of the hearing aid (cf. electric input signals (X₁, X₂)) and the context dependent command (cf. control signal CTXcmd, e.g. "Could you please repeat?"). The processing parameter controller (PPC) may be configured to classify a current acoustic environment around the user based on the electric input signals (X₁, X₂; IN1, IN2) in time-domain (IN1, IN2) and/or in the frequency domain (X₁, X₂). The processing parameter controller (PPC) may be configured to determine optimized processing parameters of the number of audio processing algorithms in dependence of the classification of the acoustic environment, or directly from the electric input signals (X₁, X₂; IN1, IN2), cf. e.g. WO2017059881A1. The processing parameter controller (PPC) may be based on or comprise a learning algorithm, e.g. a neural network, such as a deep neural network.

The embodiment of a hearing aid in FIG. 6 further comprises an own voice beamformer (OV-BF) configured to provide an estimate of the user's own voice (Yov) in dependence of the electric input signals (X₁, X₂) and fixed or adaptively updated (own-voice) beamformer weights. The estimate of the user's own voice (Yov) is fed to the keyword detector (KWD) of the voice control interface (VCI) to thereby provide a better foundation of the keyword detection (intended to work (only) on the user's voice). To further ensure that this is the case (i.e. to make the keyword detection of keywords spoken by the user even more robust) an own voice activity detector (OVD) is connected to the keyword detector (KWD) to provide the keyword (cf. signal KWx) in dependence of the own voice control signal (OVDet). Thereby, a given keyword is accepted only, if the voice of the user is simultaneously detected by the own voice activity detector (OVD) as indicated by the own voice control signal (OVDet).

The hearing aid, e.g. the processing parameter controller (PPM), may comprise a conversation detector configured to identify whether or not or with what probability, the user is currently engaged in a conversation and to provide a conversation control signal indicative thereof. Conversation tracking (e.g. a conversation detector) can be provided in a variety of ways, see e.g. EP3930346A1, or US20120020505A1, or EP3641345A1, e.g. using a combination of own voice detection, and general voice detection, and an analysis of their mutual timing (e.g. identification of turn-taking), etc. Thereby situations, where the dual meaning of the context dependent commands is intended, can be identified.

The hearing aid, e.g. the processing parameter controller (PPM), may e.g. comprise a voice activity detector configured to detect whether a voice is present in the environment of the user. The voice detector may be configured to differentiate between the voice of the hearing aid user and other voices (e.g. using a combination of a dedicated own voice detector and a more general voice detector). Thereby a conversation between the user and one or more other persons may be identified. In combination with a detection of a context dependent command while the user is in a conversation, an acoustic situation where the dual function of relevance for the context dependent commands may be identified (e.g. resulting in a) a message to the conversation partner (by the content (meaning) of the context dependent command) and b) a `message (request) to the hearing aid' to apply `optimized parameters').

The processing parameter controller (PPM) may be configured to apply the optimized processing parameters for the at least one of the number of audio processing algorithms when a) a context dependent command is detected by the keyword detector (KWD) and b) (at the same time) the specific current acoustic environment of the hearing aid (e.g. the specific sound scene class, e.g. `speech in noise', e.g. `conversation') associated with the detected context dependent command is detected (e.g. by the acoustic environment detector (PPM)).

In the embodiment of a hearing aid in FIG. 6, the voice control interface (VCI) further comprises a command controller (CC) configured to sort the various keywords (KWx) identified by the keyword detector, including to select the context dependent command(s) and feed it/them to the appropriate processing algorithm (e.g. related to noise reduction), while feeding possible non-context dependent commands (e.g. related to a program shift, or to a volume change, or to an acceptance or rejection of an incoming telephone call, etc.) to the relevant functional blocks of the hearing aid.

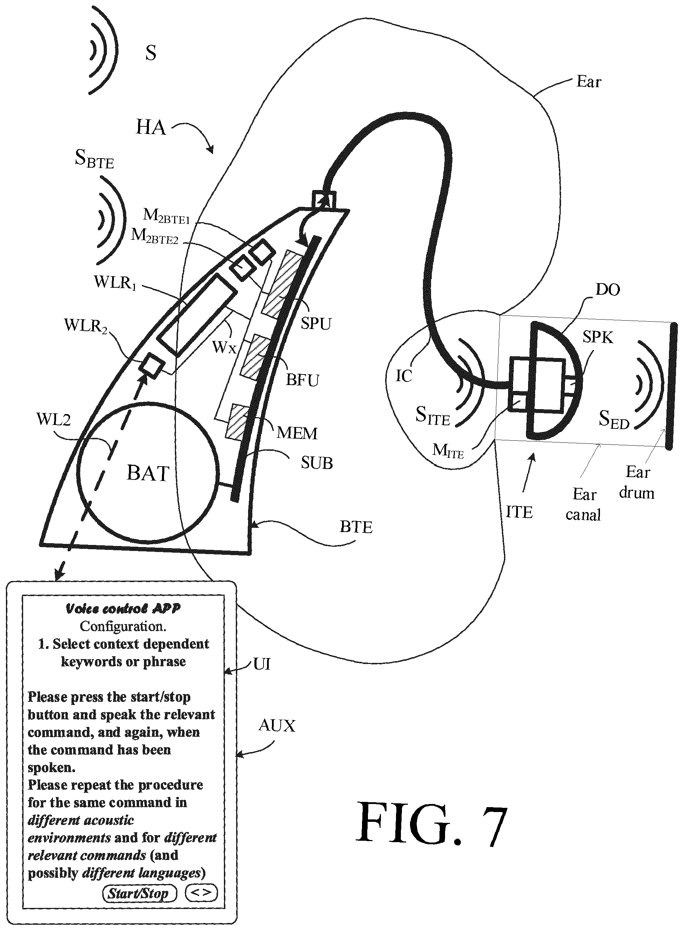

FIG. 7 shows an embodiment of a hearing aid in communication with an auxiliary device adapted to run an APP for configuring a voice control interface (VCI) comprising context dependent commands according to the present disclosure.

FIG. 7 shows an embodiment of a hearing aid (HA) according to the present disclosure comprising a BTE-part (BTE) adapted to be located behind an ear (Ear) or a user and an ITE part (ITE) adapted to be located in an ear canal (Ear canal) of the user. FIG. 7 illustrates an exemplary hearing aid (HA) formed as a receiver in the ear (RITE) type hearing aid wherein the ITE part (ITE) comprises an output transducer (e.g. a loudspeaker/receiver, SPK) of a size adapted for being located in the ear canal (Ear canal) of the user (e.g. exemplifying a hearing aid (HA) as shown in FIG. 6). The BTE-part and the ITE-part are connected (e.g. electrically connected) by a connecting element (IC). In the embodiment of a hearing aid of FIG. 7, the BTE part comprises two input transducers (here microphones) (M_{BTE1}, M_{BTE2}) each for providing an electric input audio signal representative of an input sound signal (S_{BTE}) from the environment (in the scenario of FIG. 7, from sound source S). The hearing aid of FIG. 7 further comprises two wireless receivers (WLR₁, WLR₂) for providing respective directly received auxiliary audio and/or information signals. The hearing aid (HA) further comprises a substrate (SUB) whereon a number of electronic components are mounted, functionally partitioned according to the application in question (analogue, digital, passive components, etc.), but including a configurable signal processing unit (SPU) (e.g. comprising the audio signal processor (ASP) of FIG. 6), a beamformer filtering unit (BFU) (e.g. including the own voice and environment beamformers (OV-BF, E-BF) of FIG. 6), and a memory (MEM) coupled to each other and to input and output units via electrical conductors (Wx). The mentioned functional units (as well as other components) may be partitioned in circuits and components according to the application in question (e.g. with a view to size, power consumption, analogue vs digital processing, etc.), e.g. integrated in one or more integrated circuits, or as a combination of one or more integrated circuits and one or more separate electronic components (e.g. inductor, capacitor, etc.). The configurable signal processing unit (SPU) provides an enhanced audio signal (cf. signal OUT in FIG. 6), which is intended to be presented to a user. In the embodiment of a hearing aid device in FIG. 7, the ITE part comprises an output unit in the form of a loudspeaker (receiver) (SPK) for converting the electric signal (OUT) to an acoustic signal (providing, or contributing to, acoustic signal S_{ED} at the ear drum (Ear drum).

The ITE-part may further comprises an input unit comprising an input transducer (e.g. a microphone) (M_{ITE}) for providing an electric input audio signal representative of an input sound signal S_{ITE} from the environment at or in the ear canal. In another embodiment, the hearing aid may comprise only the BTE-microphones (M_{BTE1}, M_{BTE2}), e.g. equivalent to microphones the (Mic1, Mic2) of the hearing aid of FIG. 6. In yet another embodiment, the hearing aid may comprise an input unit comprising an input transducer located elsewhere than at the ear canal in combination with one or more input transducers located in the BTE-part and/or the ITE-part. The ITE-part further comprises a guiding element, e.g. a dome, (DO) for guiding and positioning the ITE-part in the ear canal of the user.

The hearing aid (HA) exemplified in FIG. 7 is a portable device and further comprises a battery (BAT) (here located in the BTE-part) for energizing electronic components of the BTE- and ITE-parts.

The hearing aid (HA) comprises a directional microphone system (beamformer filtering unit (BFU)) adapted to enhance a target acoustic source among a multitude of acoustic sources in the local environment of the user wearing the hearing aid device (cf. environment beamformer (E-BF) of FIG. 6). In an embodiment, the directional system is adapted to detect (such as adaptively detect) from which direction a particular part of the microphone signal (e.g. a target part and/or a noise part) originates and/or to receive inputs from a user interface (e.g. a remote control or a smartphone) regarding the present target direction. The memory (MEM) may comprise predefined (or adaptively determined) complex, frequency dependent parameters defining predefined or (or adaptively determined) beam patterns for use according to the present disclosure (e.g. for subsequently increasing beamforming, or increasing noise reduction gain (attenuation)).

The hearing aid of FIG. 7 may constitute or form part of a hearing aid and/or a binaural hearing aid system according to the present disclosure.

The hearing aid (HA) according to the present disclosure may comprise a user interface (UI), e.g. as shown in FIG. 7 implemented in an auxiliary device (AUX), e.g. a remote control, e.g. implemented as an APP in a smartphone or other portable (or stationary) electronic device. In the embodiment of FIG. 7, the screen of the user interface (UI) illustrates a *Voice control APP.* A voice control interface of the hearing aid may e.g. be configured via the user interface (UI).

The hearing aid (including the user interface (UI)) may e.g. be configured with context dependent commands according to the present disclosure. The user interface may include a guide line (a `wizard') to guide the user how enter context dependent commands (e.g. comprising keywords or key phrases). Thereby the user may enter the specific wording of a context dependent command, e.g. 'Could you please repeat?' (and variations thereof, e.g. 'Can you repeat that?', e.g. in several languages, if appropriate for the user). The user may, e.g. in a specific learning mode, be instructed to speak the context dependent commands (and possible other commands to be known by the voice control interface) in several different acoustic environments (e.g. having different signal to noise ratios). The APP (e.g. the auxiliary device) may comprise an (e.g. learning) algorithm that learns to recognize the relevant (e.g. user defined) commands when spoken by the user (in different acoustic environments, e.g. having different signal to noise ratios). Thereby the algorithm may 'build' a model of the user's voice based on samples of the voice commands, provided by the user,

The exemplary screen illustrated in FIG. 7 shows page 1 of the of the `Voice control APP'. From this screen a configuration of the voice control interface of the hearing aid can be initiated. The screen encourages the user to `Select context dependent keywords or phrase' and provides an instruction as to how to enter the chosen command(s) into the APP by pressing a 'Start/Stop' button (in the bottom of the screen) before and after speaking a particular command.

The detailed instruction on the screen is as follows:
- Please press the start/stop button and speak the relevant command, and again, when the command has been spoken.
- Please repeat the procedure for the same command in different acoustic environments and for different relevant commands (and possibly different languages).

Other instructions regarding the entering of context related commands (e.g. examples thereof) may be located on subsequent screens (accessible via the button in the lower right part of the screen of FIG. 7 denoted < >.

Other parameters or features of the voice control interface may be implemented, e.g. related to
- The association of a given context dependent command with given processing algorithms (e.g. noise reduction).
- The association of a specific context dependent command for a specific processing algorithm with a specific sound scene class, e.g. provided by an acoustic environment detector.
- The termination of `enhanced mode' provided by a given command (e.g. after a user defined time, or by changing to a specific program).
- The size of steps to be used in modification of parameters of a given algorithm associated with a given command, when repeated by the user (to increase the effect of the algorithm, e.g. noise reduction).
- Etc.

The auxiliary device (AUX) and the hearing aid (HA) are adapted to allow communication of data representative of the data entered via the user interface (e.g. the model of the user's voice) to the hearing aid via a, e.g. wireless, communication link (cf. dashed arrow WL2 in FIG. 7). The communication link WL2 may e.g. be based on far field communication, e.g. Bluetooth, or Bluetooth Low Energy (or similar technology), or UWB, implemented by appropriate antenna and transceiver circuitry in the hearing aid (HD) and the auxiliary device (AUX), indicated by transceiver unit WLR₂ in the hearing aid.

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art.

The claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more.

### REFERENCES

- US20200312303A1 (Sonova) 01.10.2020
- WO2017059881A1 (Widex) 13.04.2017
- EP3726856A1 (Oticon) 21.10.2020
- EP3930346A1 (Oticon) 29.12.2021
- US20120020505A1 (Panasonic) 26.01.2012
- EP3641345A1 (Sivantos) 22.04.2020

## Claims

1. A hearing aid (HA) adapted to be worn by a user, the hearing aid comprising
• at least one input transducer for converting sound in the environment to respective at least one electric input signal;
• a configurable audio signal processor (ASP) adapted to apply a number of audio processing algorithms to said at least one electric input signal, or to a signal or signals originating therefrom;
• an output transducer for converting an output signal depending on said at least one electric input signal to stimuli perceivable as sound for said user;
• a processing parameter controller (PPC) configured to identify and apply optimized processing parameters for at least one of said number of audio processing algorithms to said at least one electric input signal, or to a signal or signals originating therefrom, and to provide a processed signal in dependence thereof;
• a voice control interface (VCI) allowing the user to control the hearing aid via one or more spoken commands; the voice control interface comprising
∘ a keyword detector (KWD) configured to identify at least one of said one or more spoken commands, wherein said at least one of said one or more spoken command is a context dependent command, and
wherein
said processing parameter controller (PPC) is configured to apply said optimized processing parameters for said at least one of said number of audio processing algorithms in dependence of a current acoustic environment of the hearing aid and said context dependent command.

2. A hearing aid according to claim 1 wherein said context dependent command relates to the user's perception of the current acoustic environment.

3. A hearing aid according to claim 1 or 2 wherein said context dependent command is configured to have a dual function of:
• indicating to a communication partner that the listening situation provided by the current acoustic environment is difficult for the user, and
• controlling the application of the optimized processing parameters to the at least one of said number of audio processing algorithms.

4. A hearing aid according to any one of claims 1-3 wherein said context dependent command expresses a wish for a communication partner to speak more clearly and/or louder and/or to repeat the last words or sentences having been spoken by the communication partner.

5. A hearing aid according to any one of claims 1-4 wherein the keyword detector is configured to identify a multitude of context dependent spoken commands having the same associated optimized processing parameters.

6. A hearing aid according to any one of claims 1-5 wherein said number of audio processing algorithms comprises a noise reduction algorithm providing attenuation parameters for application to noise components in said at least one electric input signal.

7. A hearing aid according to any one of claims 1-6 comprising at least two input transducers providing respective at least two electric input signals wherein said number of audio processing algorithms comprises a beamforming algorithm providing spatial filtering of said sound in the environment in dependence of said at least two electric input signals and predefined or adaptively updated beamformer weights.

8. A hearing aid according to claims 6 or 7 wherein optimized processing parameters include said attenuation parameters and/or said beamformer weights.

9. A hearing aid according to claim 8 wherein the processing parameter controller (PPC) is configured to provide that repeated use of the context dependent command results in said attenuation parameters are configured to increase noise reduction, and/or that said beamformer weights are configured to provide increased beamforming.

10. A hearing aid according to any one of claims 1-9 comprising an own voice activity detector connected to the keyword detector and configured to provide that a given keyword is accepted only, if the voice of the user is simultaneously detected.

11. A hearing aid according to any one of claims 1-10 wherein said keyword detector comprises a separate context dependent command detector configured to detect said at least one context dependent spoken command.

12. A hearing aid according to any one of claims 1-11 comprising an acoustic environment detector configured to classify a current acoustic environment around the hearing aid in a number of sound scene classes.

13. A hearing aid according to any one of claims 1-12 wherein a specific context dependent command is associated with a specific acoustic environment.

14. A hearing aid according to claim 13, wherein the processing parameter controller (PPC) is configured to apply the optimized processing parameters for the at least one of the number of audio processing algorithms in dependence of the specific current acoustic environment of the hearing aid and the associated context dependent command.

15. A hearing aid according to any one of claims 1-14 comprising a conversation detector configured to identify whether or not or with what probability, the user is currently engaged in a conversation and to provide a conversation control signal indicative thereof.

16. A hearing aid according to any one of claims 1-15 being constituted by or comprising an air-conduction type hearing aid, a bone-conduction type hearing aid, a cochlear implant type hearing aid, or a combination thereof.
